# EUROPÄISCHE PATENTSCHRIFT

(11) **EP 0 389 987 B1**
(45) Veröffentlichungstag und Bekanntmachung des Hinweises auf die Patenterteilung: **12.10.1994**
(21) Anmeldenummer: 90105581.4
(22) Anmeldetag: 23.03.1990
(51) Int. Cl.: G04G 5/04, G05B 19/10

(54) **Steuereinrichtung für eine digitale Anzeige**
Controlling means for a digital display
Dispositif de commande pour affichage numérique

(30) Priorität: 31.03.1989 DE 3910411
(43) Veröffentlichungstag der Anmeldung: 03.10.1990
(73) Patentinhaber: DIEHL GMBH & CO., 90478 Nürnberg (DE)
(72) Erfinder: Meisner, Alfred, D-8500 Nürnberg (DE); Stürzl, Wilhelm, D-8501 Winkelhaid (DE); Hellwig, Jürgen, D-8500 Nürnberg (DE); Hammelsbacher, Karlheinz, D-8540 Schwabach (DE)

(56) Entgegenhaltungen:
- DE-A- 2 554 192
- FR-A- 2 547 074
- GB-A- 2 009 976
- US-A- 4 090 350
- US-A- 4 170 870

## Beschreibung

Die Erfindung betrifft eine Steuereinrichtung für die Eingabe von Funktionsdaten und Stellimpulsen für die digitale Anzeige eines elektronischen Geräts, welches alternativ verschiedene Daten, wie z. B. Uhrzeit, Temperatur, Zeitdauer, Schalt- oder Weckzeiten, Luftdruck, auf der Anzeige darstellen kann, mit einer oder mehreren Funktionstasten für die Auswahl einer Funktion und einem Stellimpulse erzeugenden Einstellelement, wie z. B. Taste, Drehknopf mit Impulskontakten, für die Verstellung der Anzeige der ausgewählten Funktion, sowie mit einem Zähler, der die anzuzeigenden Daten zur Anzeigesteuerung speichert.

Derartige Geräte sind vielfältig bekannt geworden und beispielsweise in der Form von Schaltuhren, normalen Zeituhren und Rechner mit eingebauter Uhr realisiert. Beispielsweise sei auf die DE-OS 33 20 128 verwiesen. Die Einstellung derartiger Geräte erfolgt durch die Betätigung einer oder gegebenenfalls auch zwei Funktionstasten sowie die Betätigung eines Einstellelementes, um die Verstellung der Anzeige für die ausgewählte Funktion vorzunehmen.

Es sind bereits vielfältige Eingabeverfahren bekannt geworden, um die Zahl der zu betätigenden Knöpfe bei der Eingabe zu minimieren. Aus der DE-OS 24 32 390 ist es beispielsweise bekannt, durch Drücken einer Funktionstaste die Anzeige unter Steuerung eines geräteinternen Taktes solange zu verstellen, bis der gewünschte Wert angezeigt ist. Durch nochmaliges Drücken der Funktionstaste ist der angezeigte Wert gespeichert.

Aus der schweizer Patentanmeldung 33 37/70 ist ein in mehrere Stellungen verdrehbarer Schalter bekannt, mit welchem verschiedene Funktionen auf einer Uhr vorwählbar sind, wobei durch einen Druckknopf die Anzeige für die betreffende Funktion verstellt wird.

Aus der DE-PS 25 54 192 ist es bekannt, verschiedene Funktionen bei einer Uhr durch verschieden langes Betätigen einer Funktionstaste auszuwählen.

Bei einer Anordnung wie der eingangs genannten DE-OS 33 20 128 ist eine Verstellung der Anzeige nur solange möglich, wie die betreffende Funktionstaste betätigt ist.

Aus der US-PS 4,090,350 ist es ferner bekannt, zur Reduzierung des Aufwandes an Tasten für die Eingabe von Daten in Uhren, einzelnen Tasten bestimmte Funktionen zuzuordnen und bei gemeinsamer Betätigung zweier Tasten eine weitere Funktion in der Uhr zu aktivieren.

Aus der GB 2 009 976 A ist es auch bekannt, die Daten in eine Uhr in einer bestimmten Reihenfolge einzugeben. Zunächst muß ein Sicherheitsschalter betätigt werden, um zu verhindern, daß unbeabsichtigt eine Verstellung der Uhranzeige erfolgt. Anschließend muß die Funktion ausgewählt werden und dann die Verstellimpulse eingegeben werden. Schließlich muß der Funktionswahlschalter nochmals zum Abschluß betätigt werden.

Aus der US-PS 4,170,870 ist es schließlich bekannt, bei der Verstellung einer Uhranzeige neben dem Funktionswahlschalter und dem Schalter für die Eingabe der Verstellimpulse einen weiteren Schalter vorzusehen, welcher die Anzeige an der Uhr z.B. von Minuten und Stunden umschaltet auf die Anzeige von Sekunden und Datum.

Diese letztgenannten Vorveröffentlichungen können zum Zustandekommen der Erfindung ebenfalls nichts näheres beitragen.

Die bisherigen Vorgehensweisen für die Auswahl von Funktionen an einem Gerät mit digitaler Anzeige und Verstellung dieser Anzeige sind im wesentlichen auf zwei Typen zurückzuführen. Im einen Fall muß die Funktionstaste betätigt werden und anschließend kann die ausgewählte Funktion an der Anzeige verstellt werden oder aber es muß die Funktionstaste mindestens solange gedrückt bleiben, wie der Einstellvorgang an der Anzeige dauert. Wird bei der Eingabe das von dem betreffenden Gerät vorgeschriebene Verfahren nicht eingehalten, weil z. B. die Funktionstaste noch betätigt wird, während bereits die Verstellung der Anzeige erfolgt, so treten unzulässige Zustände auf, welche die Eingabe nicht zum gewünschten Ziel führen oder aber das Gerät selbst bricht die Eingabe wegen Erreichens eines unzulässigen Zustandes ab.

Es ist Aufgabe der Erfindung, eine Anordnung vorzuschlagen, bei welcher es auf die Dauer der Betätigung der Funktionstasten vor und während der Einstellung der Anzeige nicht ankommt.

Zur Lösung der der Erfindung gestellten Aufgabe sind die im Anspruch 1, Kennzeichenteil, erläuterten Merkmale vorgesehen.

Mit der Erfindung ist es damit für den Benutzer völlig unkritisch geworden, wielange er eine Funktionstaste betätigt um die Anzeige für diese Funktion zu verstellen. Damit wird die Sicherheit gegen Fehlbedienung bei der Einstellung von Digitalanzeigen deutlich erhöht.

Wenn im folgenden von Funktionstasten die Rede ist, so ist im Sinne der Erfindung auch eine Verwendung von Funktionsschaltern anstelle der Tasten möglich. Als Einstellelement für die Anzeige können in üblicher Weise Tasten verwendet werden, bei denen eine kurzzeitige Betätigung eine digit-weise Verstellung der Anzeige oder eine längerdauernde Betätigung einer Schnellverstellung der Anzeige ermöglicht. Im Sinne der Erfindung ist auch ein Drehknopf in Form eines bekannten Impulsgenerators zur Einstellung der Anzeige möglich.

Weitere Ausbildungen der Erfindung sind in den Unteransprüchen noch näher gekennzeichnet. Nachfolgend sollen zwei Ausführungsmöglichkeiten der Erfindung anhand der Zeichnung noch näher erläutert werden.

Es zeigen:
- Figur 1: eine elektronische Herdschaltuhr von vorn in schematisierter Darstellung;
- Figur 2: ein Blockschaltbild einer Schaltungsanordnung zur Realisierung der Erfindung;
- Figur 3: eine logische Schaltung für ein erstes Ausführungsbeispiel;
- Figur 4: ein Impulsdiagramm zur Erläuterung des ersten Ausführungsbeispiels bei kurzzeitiger Betätigung einer Funktionstaste;
- Figur 5: ein Impulsdiagramm zur Erläuterung des 1. Ausführungsbeispiels bei einer längerdauernden Betätigung der Funktionstaste;
- Figur 6: eine logische Schaltungsanordnung für ein zweites Ausführungsbeispiel der Erfindung;
- Figur 7: ein Impulsdiagramm zur Erläuterung des 2. Ausführungsbeispiels bei längerdauernder Betätigung einer Funktionstaste.

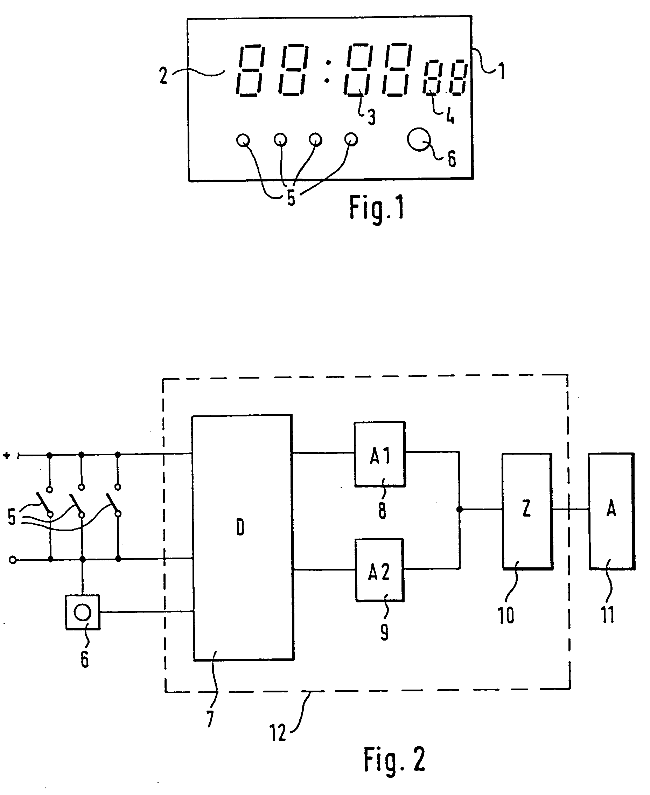

In Figur 1 ist ein elektronisches Gerät in Form einer Herdschaltuhr dargestellt. Auf der Frontseite 1 dieser Herdschaltuhr erkennt man Anzeigesegmente für die Stundenanzeige 2, eine Minutenanzeige 3 sowie eine Temperaturanzeige 4. Mit 5 sind mehrere Funktionstasten bezeichnet, mit denen die Funktionen Einstellung der Uhrzeit, Einstellung einer Schaltdauer, Einstellung eines Schaltzeitendes, Voreinstellung einer Temperatur, Einstellung einer Alarmzeit eines Kurzzeitmessers ausgewählt werden können. Mit 6 ist ein Einstellelement für die digitweise Einstellung der Digitalanzeige dargestellt, welches durch einen bekannten Impulsgenerator gebildet wird. Mit diesem ist durch Drehen des Drehknopfes eine langsame oder schnelle Verstellung der Anzeige in beiden Richtungen möglich.

In Figur 2 ist eine Schaltungsanordnung zur Realisierung der erfindungsgemäßen Steuereinrichtung dargestellt. Mit 5 und 6 sind die Funktionstasten bzw. das Einstellelement von Figur 1 bezeichnet. Mit 7 ist ein Diskriminator bezeichnet, welcher zwischen einer kurzzeitigen Betätigung einer Funktionstaste und einer längerdauernden Betätigung unterscheidet. Kurzzeitig ist dabei definiert als eine Zeitdauer, die vor der Betätigung des Einstellelementes beendet ist. Eine längerdauernde Betätigung der Funktionstaste bedeutet im gegebenen Zusammenhang, daß die Funktionstaste vor oder spätestens gleichzeitig mit der Verstellung des Einstellelementes 6 betätigt wird und mindestens solange wie die Verstellung des Einstellelementes andauert. Mit 8 ist eine erste und mit 9 eine zweite Auswerteanordnung bezeichnet, welche dem Diskriminator 7 nachgeordnet sind und zwei verschiedene Wege der Verarbeitung der vom Einstellelement 6 eingegebenen Impulse, abhängig von der Entscheidung des Diskriminators, vorsehen. Die Ausgänge beider Auswerteanordnungen liegen am Eingang eines Zählers 10, welcher als Zwischenspeicher für die nachgeordnete Anzeige 11, nämlich einer Digitalanzeige entsprechend Figur 1, dient.

Wenngleich die Erfindung nachfolgend anhand einer logischen Schaltung beschrieben wird, ist ihre Realisierung vorzugsweise jedoch durch einen Mikroprozessor vorgesehen. Dieser umfaßt in seiner Funktion die in Figur 2 in dem strichliert dargestellten Block 12 enthaltenen Baugruppen.

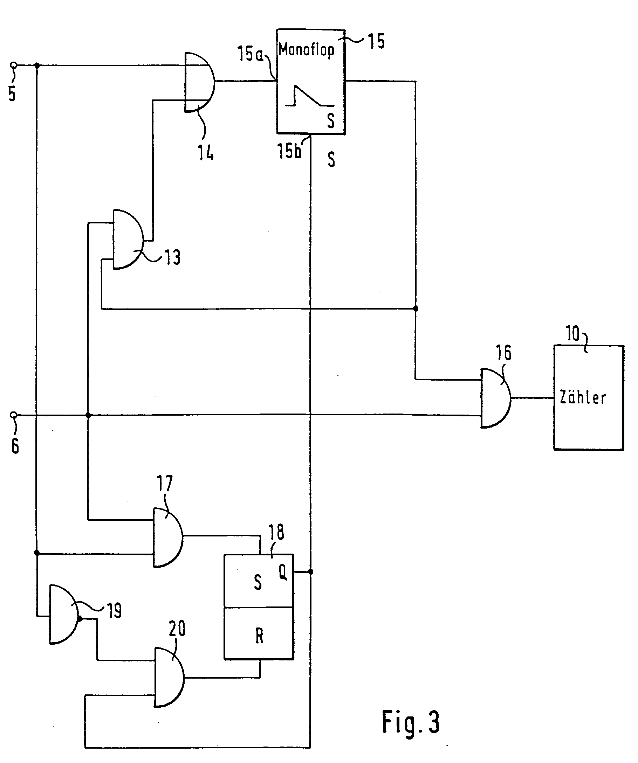

In Figur 3 ist ein erstes Ausführungsbeispiel der Erfindung in Form einer logischen Schaltung dargestellt. An den mit 5 und 6 bezeichneten Klemmen liegen die von den Funktionstasten bzw. von dem Einstellelement gemäß den Figuren 1 und 2 erzeugten Impulse. Es ist ein erstes UND-Gatter 13 vorgesehen, welches mit seinem Ausgang zusammen mit einer an die Klemme 5 angeschlossenen Leitung die Eingänge eines ersten ODER-Gatters 14 bildet. Der Ausgang des ODER-Gatters 14 liegt an einem Monoflop, welches bei Anliegen eines Impulses an seinem Dateneingang 15a einen Torimpuls erzeugt. Die Länge dieses Torimpulses wird durch die Entladung eines Kondensators bestimmt, wobei als Torzeit 4 Sekunden vorgesehen sind. Der Ausgang dieses Monoflops 15 liegt zum einen am Eingang eines zweiten UND-Gatters 16 und zum anderen am zweiten Eingang des ersten UND-Gatters 13. Schließlich besitzt das Monoflop 15 einen Setzeingang 15b (S-Eingang), wobei bei Anliegen eines Impulses an diesem Setzeingang der Kondensator des Monoflops nicht entladen wird, so daß am Ausgang des Monoflops 15 ein Dauerimpuls abgegeben wird.

Am zweiten Eingang des zweiten UND-Gatters 16 liegen die Stellimpulse von Klemme 6. Dem UND-Gatter nachgeordnet ist schließlich der Zähler 10 aus Figur 2. An den Klemmen 5 und 6 liegt ferner ein drittes UND-Gatter 17, dessen Ausgang mit dem Setzeingang eines Flip-Flops 18 verbunden ist. Die Klemme 5 liegt ferner über einen Inverter 19, der eine geringfügige Verzögerungszeit für das ankommende Signal erzeugt, an einem Eingang eines vierten UND-Gatters 20. Der zweite Eingang dieses UND-Gatters liegt am Q-Ausgang des Flip-Flops 18, der Ausgang des UND-Gatters 20 am Rücksetzeingang dieses Flip-Flops. Schließlich ist der Ausgang dieses Flip-Flops mit dem Setzeingang 15b des Monoflops 15 verbunden.

Die Elemente 17, 18, 19 und 20 bilden mit dem Monoflop 15 den Diskriminator gemäß Figur 2. Die erste Auswerteschaltung wird durch die Elemente 13, 14, 15 und 16 gebildet, während die zweite Auswerteschaltung nur durch das Element 16 realisiert ist.

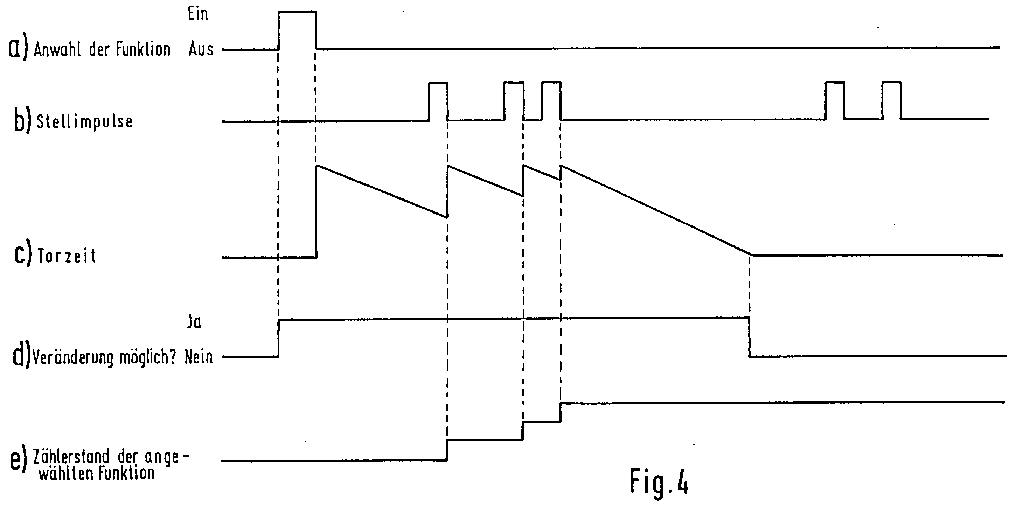

Die Funktionsweise dieser Anordnung ist die folgende. Es sei angenommen, daß die Betätigung einer Funktionstaste 5 an einem Gerät gemäß Figur 1 nur kurzzeitig erfolgt, d. h. beendet ist, ehe die Stellimpulse durch Betätigen des Einstellelementes 6 erzeugt werden. In Figur 4 erkennt man dies anhand der Impulsfolgen a und b. Sobald ein Impuls von Klemme 5 über das ODER-Gatter an dem Monoflop 15 angekommen ist, beginnt dessen Torzeit durch Entladung eines Kondensators. (Impulsfolge c) Dieses Signal am Ausgang des Monoflops 15 bereitet zum einen den Eingang des zweiten UND-Gatters 16 vor, zum andern den einen Eingang des ersten UND-Gatters 13. Werden nun vor Ablauf der Torzeit Stellimpulse an die Klemme 6 gegeben, so werden diese zum einen unmittelbar an das zweite UND-Gatter 16 gegeben und führen zu einer Veränderung des Zählerstandes des Zählers 10. Siehe Impulsfolgen b und e in Figur 4. Diese Stellimpulse gelangen über das erste UND-Gatter 13 jedoch auch über das ODER-Gatter an den Eingang 15a des Monoflops 15 und führen dort jeweils zur Erzeugung eines neuen Torimpulses, siehe Impulsfolge c. Man erkennt daraus, daß während der Eingabe von Stellimpulsen ständig ein Torimpuls vorhanden ist und damit die Einstellung der Anzeige ermöglicht. Nach Eingabe des letzten Stellimpulses läuft die Torzeit ab und führt, siehe Impulsfolge d in Figur 4, zu einem Abschluß der Eingabe. Werden jetzt, wie in Impulsfolge b dargestellt, später nochmals Stellimpulse eingegeben, so werden diese nicht mehr akzeptiert, die Anzeige bleibt unverändert.

Die vorbeschriebene Funktion ist nur möglich, weil am Ausgang des Flip-Flops 18 kein Signal erzeugt wird, dieses Flip-Flop sich also im zurückgesetzten Zustand befindet. Dieser Zustand des Flip-Flops ergibt sich dardurch, daß die Durchschaltbedingung des UND-Gatters 17 wegen der Unterschiedlichkeit der Impulse an den Klemmen 5 und 6 nicht gegeben war, durch den Inverter 19 jedoch bei Beendigung des Impulses von Klemme 5 der eine Eingang des UND-Gatters 20 auf logisch 1 gesetzt wird. Der andere Eingang des UND-Gatters ist ohnehin im Grundzustand auf logisch 1, da das Flip-Flop 18 zunächst immer gesetzt ist. Bei Durchschalten des UND-Gatters 20 wird das Flip-Flop 18 jedoch zurückgesetzt und das Signal an seinem Ausgang und damit das Signal am Eingang 15b des Monoflops 15 verschwindet.

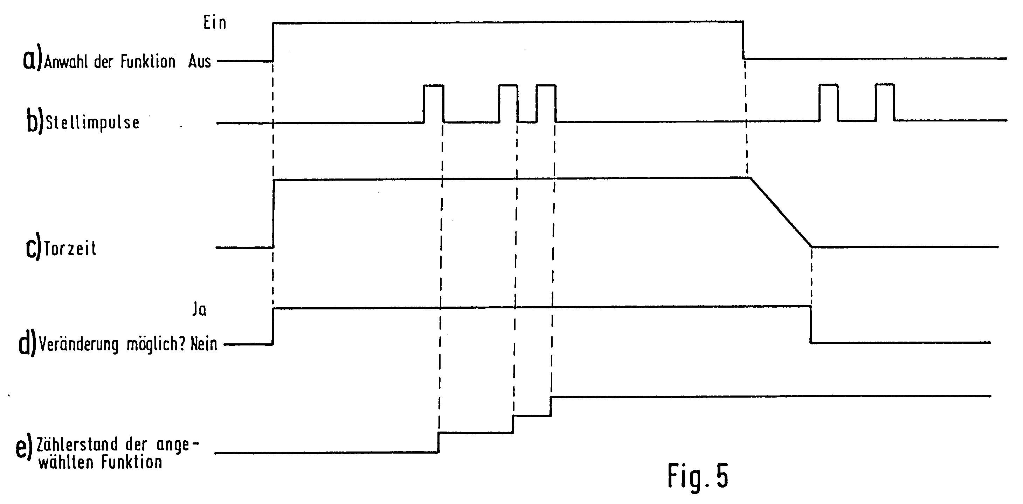

Erfolgt eine längerdauernde Betätigung einer Funktionstaste 5, so soll die Schaltung nunmehr anhand des Impulsdiagramms von Figur 5 erläutert werden. Durch das gleichzeitige Auftreten von Impulsen an den Klemmen 5 und 6 wird die Durchschaltbedingung des UND-Gatters 17 erfüllt und an dessen Ausgang entsteht ein Setzsignal für das Flip-Flop 18. Dieses wird entweder in den Setz-Zustand zurückgesetzt oder aber - wenn es diesen Zustand bereits eingenommen hat - dort belassen. Am Ausgang Q entsteht ein Dauersignal für den Eingang 15b. Die Durchschaltbedingung für das UND-Gatter 20 wird in diesem Falle nicht erfüllt. Das Monoflop wird durch das Signal am Eingang 15b in einen Dauerschaltzustand versetzt und gibt an seinem Ausgang ein Dauersignal ab, welches zum einen das UND-Gatter 16 und zum anderen das UND-Gatter 13 vorbereitet. Weitere Stellimpulse erfüllen somit ständig die Durchschaltbedingung des UND-Gatters 16 und werden in den Zähler 10 eingezählt. Siehe Impulsfolge b in Figur 5.

Sobald die Funktionstaste 5 losgelassen wird, wird die Durchschaltbedingung für das UND-Gatter 17 nicht mehr erfüllt und das Flip-Flop 18 zurückgesetzt. Das Signal am Eingang 15b des Monoflops 15 verschwindet und die Eingabe von Stellimpulsen kann nur mehr während der Torzeit des nunmehr als letztes auftretenden Torimpulses erfolgen. Die Torzeit wird durch die endgültige Entladung des Kondensators des Monoflops bestimmt. Siehe Impulsfolge c in Figur 5. Sollten während der Torzeit - siehe auch Impulsfolge d in Figur 5 - noch Stellimpulse kommen, so würden diese von der Anordnung entsprechend den Erläuterungen gemäß Figur 4 verarbeitet. Kommen derartige Stellhingegen erst nach Ablauf der Torzeit, wie in Impulsfolge b in Figur 5 dargestellt, so werden diese von der Anordnung nicht mehr akzeptiert.

Während die anhand von Figur 4 beschriebenen Funktionen, nämlich die kurzzeitige Bedienung einer Funktionstaste und die nachfolgende Verstellung der Digitalanzeige mit einer Hand an der Schaltuhr durchgeführt werden können, ist die anhand von Figur 5 beschriebene Betätigungsweise, nämlich gleichzeitige Betätigung einer Funktionstaste und des Einstellelements nur mit zwei Händen möglich.

Läßt der Benutzer während der beidhändigen Eingabe aus Versehen die Funktionstaste los, so wird dies von der Anordnung automatisch ausgeglichen, da, wie vorstehend erläutert die Schaltung von einer Arbeitsweise gemäß Erläuterungen zu Figur 5 in eine Arbeitsweise gemäß Erläuterungen zu Figur 4 übergeht. Es ist somit für den Benutzer völlig unkritisch wie lange er eine Funktionstaste betätigt. Die einzige Bedingung die erfüllt werden muß ist, daß der erste Stellimpuls nicht später als 4 Sekunden nach dem Loslassen einer Funktionstaste erzeugt werden muß.

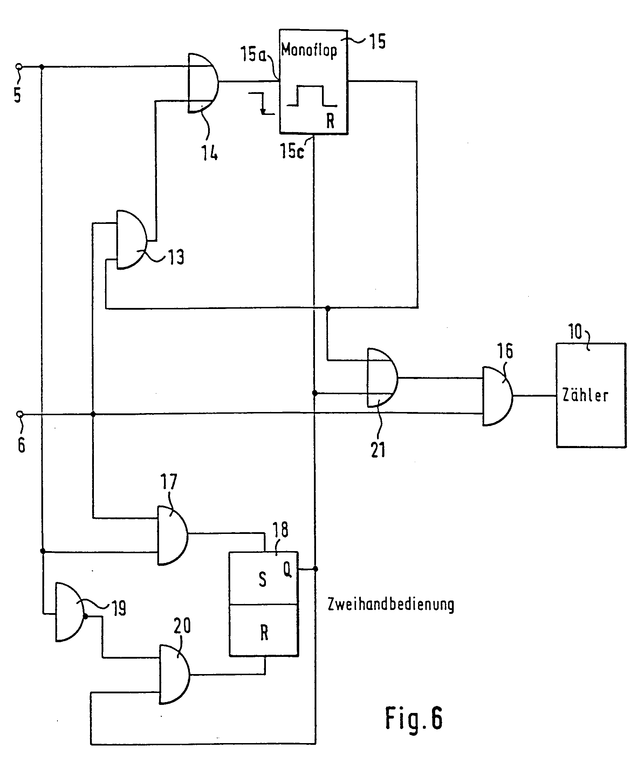

Die Anordnung gemäß Figur 6 unterscheidet sich nur geringfügig von jener nach Figur 3. Diskriminatior und zweite Auswerteschaltung gemäß Figur 2 sind unverändert geblieben, hingegen hat sich die Auswertung der ersten Auswerteanordnung etwas verändert. Zum einen ist an dem Monoflop der zweite Setzeingang (R-Eingang) 15c an den Ausgang des Flip-Flops 18 gelegt, mit der Folge, daß bei einem Signal am Ausgang des Flip-Flops 18 das Monoflop 15 keinen Torimpuls abgeben kann, weil der Kondensator ständig in einem entladenen Zustand gehalten wird. Damit trotzdem eine Auswertung einer beidhändigen Eingabe möglich ist, d. h. bei gleichzeitiger Betätigung von Funktionstaste und Einstellelement, ist ein ODER-Gatter 21 vorgesehen, welches in diesem Falle das Dauersignal des Flip-Flops 18 an den einen Eingang des UND-Gatters 16 weiterleitet und dieses für die Durchschaltung des Stellimpulses vorbereitet. Die Funktionsweise dieser Anordnung bei kurzzeitiger Betätigung einer Funktionstaste 5 erfolgt in der schon anhand der Figuren 3 und 4 beschriebenen Weise. Da bei diesem Schaltzustand der Anordnung das Flip-Flop 18 an seinem Ausgang kein Signal führt, da es zurückgesetzt ist, wird das Monoflop 15, da an seinem Eingang 15c kein Signal anliegt, nicht beeinflußt und erzeugt in der schon beschriebenen Weise die Torimpulse, welche durch das ODER-Gatter 21 an das UND-Gatter 16 gelangen.

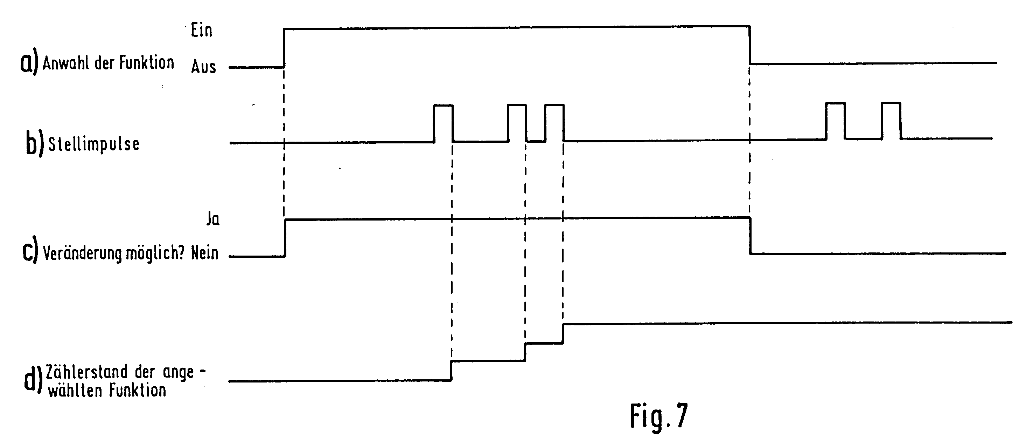

Der Unterschied in der Wirkungsweise der Anordnung nach Figur 6 zu jener von Figur 3 tritt am Ende einer beidhändigen Eingabe auf. Man erkennt dies an Impulsfolge c in Figur 7. Die Veränderungsmöglichkeit endet mit der Beendigung der Funktion. Zu diesem Zeitpunkt wird nämlich das Flip-Flop 18 zurückgesetzt, an dem ODER-Gatter 21 und damit am Eingang des UND-Gatters 16 verschwindet das Dauersignal, gleichzeitig kann jedoch wegen des Verschwindens der Impulse am ODER-Gatter 14 und damit am Eingang des Monoflops 15 kein neuer Torimpuls erzeugt werden, so daß neu eingegebene Stellimpulse ab diesem Zeitpunkt das UND-Gatter 16 nicht mehr durchschalten können. Man erkennt an dieser Stelle den Zweck der geringen Verzögerungszeit des Inverters 19, da am Eingang 15a das Impulsende eher erscheinen muß, als das Signal am Ausgang des Flip-Flops 18 verschwindet.

Die vorbeschriebene Anordnung wird man dort verwenden, wo man die anhand von Figur 3 beschriebene Möglichkeit vermeiden möchte, daß nach Loslassen der Funktionstaste während des Einstellvorgangs noch weitere Stellimpulse eingegeben werden können.

## Patentansprüche

1. Steuereinrichtung für die Eingabe von Funktionsdaten und Stellimpulsen für die digitale Anzeige eines elektronischen Geräts, welches alternativ verschiedene Daten wie z. B. Uhrzeit, Temperatur, Zeitdauer, Schalt- oder Weckzeiten und Luftdruck auf der Anzeige darstellen kann, mit einer oder mehrer-en Funktionstasten für die Auswahl einer Funktion und einem Stellimpulse erzeugenden Einstellelement wie z. B. Taste, Drehknopf mit Impulskontakten, für die Verstellung der Anzeige der ausgewählten Funktion sowie mit einem Zähler, der die anzuzeigenden Daten zur Anzeigesteuerung speichert,
dadurch gekennzeichnet,
daß eine Anordung (7) vorgesehen ist, die diskriminiert, ob bei der Betätigung des Einstellelementes (6) die Funktionstaste (5) für die auszuwählende Funktion bereits losgelassen ist oder nicht und abhängig davon, die vom Einstellelement eingegebenen Daten vor Einspeisung in den Zähler (10) der einen (13, 14, 15, 16; 8) oder anderen (16; 9) von zwei Auswerteanordnungen (13, 14, 15, 16; 8, 9) zuführt.

2. Steuereinrichtung nach Anspruch 1,
dadurch gekennzeichnet,
daß als Diskriminator (7) ein Speicherelement (18) vorgesehen ist, welches über eine erste UND-Verknüpfung (17) bei gleichzeitigem Vorliegen eines Impulses von der gedrückten Funktionstaste (5) und dem betätigten Einstellelement (6) in den ersten Zustand (gesetzter Zustand) gesetzt wird und damit einen Dauer-Impuls an seinen Ausgang abgibt und über eine zweite UND-Verknüpfung (20) bei nicht gleichzeitigem Vorliegen eines Impulses von der Funktionstaste (5) und dem Einstellelement (6) in seinen zweiten Zustand (nicht gesetzter Zustand) gesetzt wird und damit keinen Impuls an seinen Ausgang abgibt, daß ferner das Speicherelement (18) mit seinem Ausgang mit einer einen Torimpuls definierter Dauer abgebenden Anordnung (15) derart verbunden ist, daß bei einem Impuls am Ausgang des Speicherelements (18) kein Torimpuls, bei keinem Impuls am Ausgang des Speicherelements (18) hingegen ein Torimpuls entsteht.

3. Steuereinrichtung nach Anspruch 2,
dadurch gekennzeichnet,
daß bei einem vom Speicherelement (18) erzeugten und am ersten Setzeingang (15b) (S-Eingang) anliegenden Impuls das Monoflop (15) einen Dauerimpuls abgibt.

4. Steuereinrichtung nach Anspruch 2,
dadurch gekennzeichnet,
daß die einen Torimpuls abgebende Anordnung als Monoflop (15) ausgebildet ist, welches zwei Setzeingänge (15b, 15c) derart aufweist, daß bei einem vom Speicherelement (18) erzeugten und am zweiten Setzeingang (R-Eingang) (15c) anliegenden Impuls das Monoflop (15) keinen Impuls abgibt und bei Anliegen keines Impulses an diesem Eingang (15b) einen Torimpuls dann abgibt, wenn ein Impuls der Funktionstaste (5) oder des Einstellelementes (6) an seinem Dateneingang (15a) vorliegt.

5. Steuereinrichtung nach Anspruch 1,
dadurch gekennzeichnet,
daß in einer ersten Auswerteanordnung (8) für die Stellimpulse nach Ende der Betätigung der Funktionstaste (5) ("nicht gleichzeitige Betätigung") ein Torimpuls definierter Zeitdauer erzeugt wird und daß bei Eingabe eines Stellimpulses während der Dauer des Torimpulses ein neuer Torimpuls erzeugt wird.

6. Steuereinrichtung nach Anspruch 1,
dadurch gekennzeichnet,
daß in einer zweiten Auswerteanordnung (9) für die Stellimpulse bei gleichzeitiger Betätigung von Funktionstaste (5) und Einstellelement (6) eine UND-Verknüpfung (16) der Impulse von Funktionstaste und Einstellelement vorgenommen wird.

7. Steuereinrichtung nach den Ansprüchen 1 und 3,
dadurch gekennzeichnet,
daß nach Beendigung der gleichzeitigen Betätigung von Funktionstaste (5) und Einstellelement (6), der Impuls am ersten Setzeingang (15b) der einen Torimpuls abgebenden Anordnung (15) durch Umschaltung des Speicherelementes (18) verschwindet und damit ein Torimpuls am Ausgang dieser Anordnung (15) entsteht, während dessen Dauer ein oder mehrere weitere Stellimpulse eingegeben werden können.

8. Steuereinrichtung nach einem oder mehreren der Ansprüchen 1 bis 7,
dadurch gekennzeichnet,
daß Diskriminator (7), Auswerteanordnungen (8, 9) und Zähler (10) durch einen Mikroprozessor (12) realisiert sind.

9. Steuereinrichtungen nach den Ansprüchen 1 und 4,
dadurch gekennzeichnet,
daß die erste Auswerteanordnung (8) ein erstes ODER-Gatter (14) enthält, an dem die Impulse der Funktionstasten sowie der Ausgangsimpulse eines ersten UND-Gatters (14) liegen, daß mit dem ODER-Gatter (14) der Dateneingang (15a) eines Monoflops (15) verbunden ist, das an seinem Ausgang Torimpulse abgibt, und daß dieses Monoflop (15) zwei Setzeingänge (S-Eingang bzw. R-Eingang) (15b, 15c) aufweist und mit seinem Ausgang sowohl mit dem ersten Eingang des ersten UND-Gatters (13) als auch mit dem ersten Eingang eines zweiten UND-Gatters (16) in Verbindung steht, daß ferner den zweiten Eingängen beider UND-Gatter (13, 16) die Stellimpulse zugeführt werden, und daß dem zweiten UND-Gatter (16) der Zähler (10) nachgeordnet ist.

10. Steuereinrichtung nach den Ansprüchen 1 bis 5,
dadurch gekennzeichnet,
daß die zweite Auswerteanordnung aus einem UND-Gatter besteht, dem der Zähler (10) nachgeordnet ist.

11. Steuereinrichtung nach den Ansprüchen 1, 9 und 10,
dadurch gekennzeichnet,
daß der Diskriminator (7) ein Flip-Flop (18) als Speicherelement aufweist, dessen Setzeingang ein drittes UND-Gatter (17) und dessen Rücksetzeingang ein viertes UND-Gatter (20) vorgeschaltet sind, daß an den beiden Eingängen des dritten UND-Gatters (17) die Impulse der Funktionstasten (5) und des Einstellelementes (6) liegen, daß ferner der eine Eingang des vierten UND-Gatters (20) am Q-Ausgang des Flip-Flops (18) liegt und daß am anderen Eingang des UND-Gatters (20) die Impulse der Funktionstasten (5) über einen zwischengeschalteten Inverter (19) mit kleiner Verzögerungszeit anliegen.

12. Steuereinrichtung nach Anspruch 11,
dadurch gekennzeichnet,
daß der Q-Ausgang des Flip-Flops (18) mit dem ersten Setzeingang (15b) (S-Eingang) des Monoflops (15) verbunden ist.

13. Steuereinrichtung nach Anspruch 11,
gekennzeichnet,
daß der Q-Ausgang des Flip-Flops (18) mit dem zweiten Setzeingang (15c) (R-Eingang) des Monoflops sowie mit dem einen Eingang eines zweiten ODER-Gatters (21) verbunden ist und der Ausgang des letzteren anstelle des Ausgangs des Monoflops (15) mit dem ersten Eingang des zweiten UND-Gatters (16) verbunden ist und daß der zweite Eingang des ODER-Gatters (21) am Ausgang des Monoflops (15) liegt.

## Claims

1. Control device for the input of function data and control pulses for the digital display of an electronic device, which can show different data, e.g. time, temperature, time period, switching or waking times and air pressure, alternately on the display, with one or several function keys for selecting a function, and an adjusting element generating control pulses, e.g. key, control knob with pulse contacts, for adjusting the display of the selected function, and with a counter, which stores the data to be displayed for display control, characterised in that a system (7) is provided which, when the adjusting element (6) is operated, discriminates whether the function key (5) for the function to be selected has been released or not, and dependent on this, passes the data input by the adjusting element to one (13, 14, 15, 16; 8) or the other (16; 9) of two evaluator systems (13, 14, 15, 16; 8, 9) before they are fed into the counter (10).

2. Control device according to Claim 1, characterised in that the provided discriminator (7) is a storage element (18), which is set in its first status (set status) by means of a first AND operation (17) in the presence of a simultaneous pulse from the depressed function key (5) and the operated adjusting element (6), whereupon it emits a continuous pulse to its output, and is set in its second status (non-set status) by means of a second AND operation (20) when no simultaneous pulse from the function key (5) and the adjusting element (6) is present, whereupon it does not emit a pulse to its input; that the storage element (18) is moreover connected at its output to a system (15) emitting a gate pulse of defined duration in such a way that no gate pulse is formed when there is a pulse at the output of the storage element (18), and a gate pulse is formed when there is no pulse at the output of the storage element (18).

3. Control device according to Claim 2, characterised in that when a pulse is generated by the storage element (18) and is present at the first set input (15b) (S-input), the monostable circuit (15) emits a continuous pulse.

4. Control device according to Claim 2, characterised in that the system emitting a gate pulse is in the form of a monostable circuit (15), which has two set inputs (15b, 15c) so that when a pulse is generated by the storage element (18) and is present at the second set input (R-input) (15c), the monostable circuit (15) does not emit a pulse, and when no pulse is present at this input (15b), it emits a gate pulse when a pulse from the function key (5) or the adjusting element (6) is present at its data input (15a).

5. Control device according to Claim 1, characterised in that in a first evaluator system (8) for the control pulses when operation of the function key (5) has ended ("non-simultaneous operation"), a gate pulse of defined duration is generated, and that on input of a control pulse during the duration of the gate pulse, a new gate pulse is generated.

6. Control device according to Claim 1, characterised in that in a second evaluator system (9) for the control pulses during the simultaneous operation of the function key (5) and adjusting element (6), an AND operation (16) of the pulses from function key and adjusting element is implemented.

7. Control device according to Claims 1 and 3, characterised in that on conclusion of the simultaneous operation of function key (5) and adjusting element (6), the pulse at the first set input (15b) of the system (15) emitting a gate pulse disappears as a result of switchover of the storage element (18), whereupon a gate pulse is formed at the output of this system (15), during the duration of which one or several further control pulses may be input.

8. Control device according to one or several of Claims 1 to 7, characterised in that discriminator (7), evaluator system (8, 9) and counter (10) are actuated by a microprocessor (12).

9. Control device according to Claims 1 and 4, characterised in that the first evaluator system (8) includes a first OR circuit (14), on which the pulses from the function keys and the output pulses of a first AND circuit (13) are present, that the data input (15a) of a monostable circuit (15), which emits gate pulses at its output, is connected to the OR circuit (14), and that this monostable circuit (15) has two set inputs (S-, R-input) (15b, 15c) and connects at its output both to the first input of the first AND circuit (13) and to the first input of a second AND circuit (16); that moreover the control pulses are passed to the second inputs of both AND circuits (13, 16), and that the counter (10) is connected downline from the second AND circuit (16).

10. Control device according to Claims 1 to 5, characterised in that the second evaluator system is composed of an AND circuit, the counter (10) being connected downline therefrom.

11. Control device according to Claims 1, 9 and 10, characterised in that the discriminator (7) is provided with a flip-flop circuit (18) as storage element, a third AND circuit (17) being connected upline from the set input thereof and a fourth AND circuit (20) being connected upline from the re-set input thereof; that the pulses from the function keys (5) and the adjusting element (6) are present at the two inputs of the third AND circuit (17); that moreover one input of the fourth AND circuit (20) is located at the Q-output of the flip-flop circuit (18); and that the pulses from the function keys (5) are present at the other input of the AND circuit (20) via an interposed invertor (19) with low delay time.

12. Control device according to Claim 11, characterised in that the Q-output of the flip-flop circuit (18) is connected to the first set input (15b) (S-input) of the monostable circuit (15).

13. Control device according to Claim 11, characterised in that the Q-output of the flip-flop circuit (18) is connected to the second set input (15c) (R-input) of the monostable circuit and to one input of a second OR circuit (21), and the output of the latter instead of the output of the monostable circuit (15) is connected to the first input of the second AND circuit (16), and that the second input of the OR circuit (21) is located at the output of the monostable circuit (15).

## Revendications

1. Dispositif de commande pour l'introduction de données de fonction et d'impulsion de réglage pour l'affichage numérique d'un appareil électronique, lequel peut afficher alternativement différentes données telles que l'heure, la température, la durée, les heures d'enclenchment ou de réveil et la pression atmosphérique, comportant une ou plusieurs touches de fonction pour la sélection d'une fonction ainsi qu'un élément de réglage générant des impulsions de réglage, tel que par exemple une touche, un bouton tournant avec contacts d'impulsion, pour le réglage de l'affichage de la fonction sélectionnée et comportant aussi un compteur qui stocke les données à afficher pour la commande de l'affichage, caractérisé en ce qu'il est prévu un dispositif (7) qui opère la discrimination entre le fait que lors de l'actionnement de l'élément de réglage (6), la touche de fonction (7) pour la fonction à sélectionner est déjà relâchée ou non et qui, en fonction de ceci, envoie les données, introduites par l'élément de réglage, avant envoi dans le compteur (10), à l'un (13, 14, 15, 16 ; 8) ou l'autre (16 ; 9) de deux dispositifs d'exploitation (13, 14, 15, 16 ; 8, 9).

2. Dispositif de commande selon la revendication 1, caractérisé en ce qu'il est prévu comme discriminateur (7) un élément à mémoire (18), qui par l'intermédiaire d'un premier circuit ET (17), en cas de présence simultanée d'une impulsion, est positionné dans le premier état (état positionné), par la touche de fonction (5) enfoncée et l'élément de réglage (6) actionné, et délivre une impulsion de durée à sa sortie et qui, par l'intermédiaire d'un second circuit ET (20), en l'absence simultanée d'une impulsion, est positionné dans son second état (état non positionné) par la touche de fonction (5) et l'élément de réglage (6), et ne délivre donc pas d'impulsions à sa sortie, en ce qu'en outre l'élément à mémoire (18) est relié avec sa sortie, à un dispositif (15), délivrant une impulsion de déclenchement de durée définie, en ce que dans le cas d'une impulsion à la sortie de l'élément à mémoire (18), il ne se forme pas d'impulsions de déclenchement, et qu'en revanche il se forme une impulsion de déclenchement, lorsqu'il n'y a pas d'impulsion à la sortie de l'élément à mémoire (18).

3. Dispositif de commande selon la revendication 2, caractérisé en ce que dans le cas d'une impulsion produite par l'élément à mémoire (18) et s'appliquant à la première entrée de positionnement (15b) (entrée S), la bascule monostable (15) délivre une impulsion de durée.

4. Dispositif de commande selon la revendication 2, caractérisé en ce que le dispositif délivrant une impulsion de déclenchement, est conçu à la manière d'une bascule monostable (15), qui comporte deux entrées de positionnement (15b, 15c) telles que dans le cas d'une impulsion, produite par l'élément à mémoire (18) et s'appliquant à la seconde entrée de positionnement (entrée R) (15c), la bascule monostable (15) ne délivre pas d'impulsion et lorsqu'aucune impulsion ne s'applique à cette entrée (15b), elle délivre une impulsion de déclenchement lorsqu'une impulsion de la touche de fonction (5) ou de l'élément de réglage (6) se trouve à son entrée de données (15a).

5. Dispositif de commande selon la revendication 1, caractérisé en ce que dans un premier dispositif d'exploitation (8) pour les impulsions de réglage, à la fin de l'actionnement de la touche de fonction (5) ("actionnement non simultané"), il est produit une impulsion de déclenchement de durée définie et en ce que lors de l'introduction d'une impulsion de réglage pendant la durée de l'impulsion de déclenchement, il est produit une nouvelle impulsion de déclenchement.

6. Dispositif de commande selon la revendication 1, caractérisé en ce que dans un second dispositif d'exploitation (9) pour les impulsions de réglage, en cas d'actionnement simultané de la touche de fonction (5) et de l'élément de réglage (6), il est procédé à un chaînage ET (16) des impulsions de la touche de fonction et de l'élément de réglage.

7. Dispositif de commande selon les revendications 1 et 3, caractérisé en ce qu'à l'achèvement de l'actionnement simultané de la touche de fonction (5) et de l'élément de réglage (6), l'impulsion à la première entrée de positionnement (15b) du dispositif (15), délivrant une impulsion de déclenchement, disparaît par commutation de l'élément à mémoire (18) et il se forme ainsi une impulsion de déclenchement à la sortie de ce dispositif (15), pendant la durée de laquelle une ou plusieurs autres impulsions de réglage peuvent être introduites.

8. Dispositif de commande selon une ou plusieurs des revendications 1 à 7, caractérisé en ce que le discriminateur (7), les dispositifs d'exploitation (8, 9) et le compteur (10) sont réalisés par un microprocesseur (12).

9. Dispositif de commande selon les revendications 1 et 4, caractérisé en ce que le premier dispositif d'exploitation (8) contient une première porte OU (14) à laquelle s'appliquent les impulsions des touches de fonction ainsi que les impulsions de sortie d'une première porte ET (14), en ce que l'entrée de données (15a) d'une bascule monostable (15), laquelle délivre à sa sortie des impulsions de déclenchement, est reliée à la porte OU (14), et en ce que cette bascule monostable (15) comporte deux entrées de positionnement (entrée S ou entrée R) (15b, 15c) et est reliée avec sa sortie aussi bien à la première entrée de la première porte ET (13) qu'à la première entrée d'une seconde porte ET (16), en ce qu'en outre les impulsions de réglage sont envoyées aux secondes entrées des deux portes ET (13, 16) et en ce que le compteur (10) est monté en aval de la seconde porte ET (16).

10. Dispositif de commande selon les revendications 1 à 5, caractérisé en ce que le second dispositif d'exploitation est constitué d'une porte ET en aval de laquelle est monté le compteur (10).

11. Dispositif de commande selon les revendications 1, 9 et 10, caractérisé en ce que le discriminateur (7) comporte une bascule bistable (18) servant d'élément à mémoire, une troisième porte ET (17) étant montée en amont de son entrée de positionnement et une quatrième porte ET (20), en amont de son entrée de remise à zéro, en ce qu'aux entrées de la troisième porte ET (17) s'appliquent les impulsions des touches de fonction (5) et de l'élément de réglage (6), en ce qu'en outre une entrée de la quatrième porte (20) est reliée à la sortie (Q) de la bascule bistable (18) et en ce qu'à l'autre entrée de la porte ET (20), les impulsions des touches de fonction (5) s'appliquent, par l'intermédiaire d'un inverseur (19) inséré entre eux, avec une petite temporisation.

12. Dispositif de commande selon la revendication 11, caractérisé en ce que la sortie (Q) de la bascule bistable (18) est reliée à la première entrée de positionnement (15b) (entrée S) de la bascule monostable (15).

13. Dispositif de commande selon la revendication 11, caractérisé en ce que la sortie (Q) de la bascule bistable (18) est reliée à la deuxième entrée de positionnement (15c) (entrée R) de la bascule monostable ainsi qu'à une entrée d'une deuxième porte OU (21) et la sortie de cette dernière, au lieu de la sortie de la bascule monostable (15), est reliée à la première entrée de la deuxième porte ET (16) et en ce que la seconde entrée de la porte OU (21) est reliée à la sortie de la bascule monostable (15).
